# DEMANDE DE BREVET EUROPEEN

(11) **EP 1 074 384 A1**
(43) Date de publication de la demande: **07.02.2001**
(21) Numéro de dépôt: 00420169.5
(22) Date de dépôt: 01.08.2000
(51) Int. Cl.: B32B 27/34, B32B 27/36

(54) **Procédé de protection d'un produit en polycarbonate contre la rayure, les solvants et les composés organiques**

(30) Priorité: 06.08.1999 FR 9910379
(71) Demandeur: Socrep S.A., 69120 Vaulx en Velin (FR)
(72) Inventeur: Crouzoulon, Pierre, 69006 Lyon (FR)
(74) Mandataire: Tilloy, Anne-Marie

(57) **Abrégé**

Procédé de protection d'un produit transparent en polycarbonate, contre la rayure, les solvants et les composés organiques, avec maintien de la transparence à une valeur au moins égale à celle du polycarbonate. Ce procédé consiste à extruder un produit multicouche et transparent, comprenant au moins trois couches superposées et fixées entre elles, qui sont successivement :
- une couche transparente en polycarbonate,
- une couche intermédiaire transparente dont l'épaisseur est au moins égale à 30 µm, en une matière adhésive présentant les caractéristiques suivantes :
   - indice de fluidité (MFI : ASTM D-1238 - 190°C) de la matière adhésive variant de 0,5 à 7 g en 10 minutes ;
   - température de ramollissement au moins égale à 70° C ;
   - température de transition vitreuse inférieure à 0° C ;
- et une couche transparente en une matière thermoplastique choisie dans le groupe constitué par le polyamide 10, le polyamide 11, le polyamide 12, le polyamide 13, ou un mélange desdits polyamides.

## Description

L'invention concerne un procédé pour protéger un produit extrudé transparent en polycarbonate, contre la rayure, les solvants et les composés organiques, ainsi que le produit issu de ce procédé.

Par produit extrudé, on entend dans l'ensemble de ce texte un produit pouvant avoir la forme d'une feuille, obtenue par extrusion-calandrage ou extrusion-soufflage, ou bien la forme d'un profilé, d'un tube ou d'un jonc, obtenu par extrusion.

Il est bien connu que le polycarbonate est un polymère qui, à l'état amorphe, a une excellente transparence, de l'ordre de 82 à 84 % de celle atteinte avec le polyméthacrylate de méthyle. Mais le polycarbonate est très sensible à la rayure, aux solvants et aux composés organiques gras.

Afin de protéger le polycarbonate sans en affecter la transparence, il est connu d'y appliquer un vernis de protection. Mais cette opération supplémentaire, après la transformation du polycarbonate en un produit semi-fini, conduit à un produit final onéreux.

La présente invention a pour objectif de pallier ces inconvénients, au moyen d'un produit multicouche transparent, comprenant une couche transparente en polycarbonate, ce produit multicouche devant simultanément remplir les conditions suivantes :
- sa fabrication doit pouvoir être réalisée par coextrusion, coextrusion-calandrage dans le cas d'un produit multicouche sous la forme d'une feuille, ou coextrusion-soufflage dans le cas d'un produit multicouche sous la forme d'un profilé, d'un tube ou d'un jonc ;
- la liaison entre les couches doit être suffisamment élevée pour empêcher la séparation des couches (délaminage) au cours du procédé de fabrication du produit multicouche ;
- la liaison entre les couches doit être suffisamment élevée pour empêcher la séparation des couches lors d'une utilisation normale du produit multicouche, en particulier une bonne tenue à froid (i.e. à des températures inférieures à 0° C, jusqu'à - 30° C dans certains cas).

Pour ce faire, l'invention propose un procédé de protection d'un produit transparent en polycarbonate, contre la rayure, les solvants et les composés organiques avec maintien de la transparence à une valeur au moins égale à celle du polycarbonate. Le procédé selon l'invention est caractérisé en ce que l'on extrude un produit multicouche et transparent, comprenant au moins trois couches superposées et fixées entre elles, qui sont successivement :
- une couche transparente en polycarbonate,
- une couche intermédiaire transparente, dont l'épaisseur est au moins égale à 30 µm, en une matière adhésive présentant les caractéristiques suivantes :
   - indice de fluidité (MFI : ASTM D-1238 - 190°C) de la matière adhésive variant de 0,5 à 7 g en 10 minutes;
   - température de ramollissement au moins égale à 70° C, de préférence inférieure à 150° C;
   - température de transition vitreuse (Tg) inférieure à 0° C, de préférence inférieure à - 10° C, de préférence encore inférieure à - 20° C, encore mieux, inférieure à - 30° C, selon la tenue à froid recherchée ;
- et une couche transparente en une matière thermoplastique choisie dans le groupe constitué par le polyamide 10, le polyamide 11, le polyamide 12, le polyamide 13, ou un mélange desdits polyamides.

Par température de ramollissement, on entend, dans la présente invention, la température à laquelle la matière adhésive se ramollit et commence son passage de l'état solide vers un état liquide plus ou moins visqueux.

Par température de transition vitreuse (Tg), on entend, dans la présente invention, la température à laquelle la matière adhésive passe de l'état de polymère dur et cassant à un état de polymère solide plus ou moins caoutchouteux.

De façon surprenante, le produit extrudé, multicouche et transparent issu du procédé, selon l'invention possède une transparence au moins égale à celle du polycarbonate, qui est maintenue à long terme, sous réserve de respecter des conditions normales d'utilisation de ce produit.

Pour la mise au point du procédé de protection selon l'invention, le déposant a été confronté à de multiples difficultés pour atteindre simultanément une adhérence satisfaisante entre les couches, une excellente transparence et un aspect de surface satisfaisant. Dans le cadre de l'invention, ces difficultés ont été surmontées grâce à la sélection et la combinaison des matières premières appropriées précitées et la sélection d'un procédé de fabrication, en l'occurrence la coextrusion.

Avantageusement, le produit extrudé, multicouche et transparent, possède une épaisseur totale au moins égale ou supérieure à 200 µm, de préférence, au moins égale ou supérieure à 400 µm, encore mieux au moins égale ou supérieure à 500 µm.

De préférence, la couche transparente fixée à la couche transparente en polycarbonate est formée de polyamide 11 ou de polyamide 12 ou bien encore d'un mélange de ces deux polyamides.

L'épaisseur de la couche intermédiaire transparente, en matière adhésive, est de préférence au plus égale à 100 µm. De préférence encore, elle varie de 40 µm à 80 µm. Pour atteindre une tenue à froid jusqu'à - 30° C, il est recommandé d'avoir une épaisseur de la couche intermédiaire au moins égale à 50 µm, de préférence variant de 50 µm à 70 µm.

De préférence, la matière adhésive constituant la couche intermédiaire a un indice de fluidité (M.F.I.), défini par la norme ASTM D-1238 (190°C), variant de 1 à 5 g en 10 minutes.

De préférence, la matière adhésive constituant la couche intermédiaire a une température de ramollissement qui est inférieure à 150° C. De préférence encore, cette température de ramollissement est au moins égale à 100° C, encore mieux de l'ordre de 110° C.

De préférence, la matière adhésive constituant la couche intermédiaire est thermofusible et renferme un ou plusieurs polymères choisis parmi les polymères suivants :
(a) des homo- ou co-polymères de propylène et d'alpha-oléfine modifiés à l'aide d'un acide carboxylique insaturé ou d'un dérivé, en particulier l'anhydride maléique ;
(b) des polymères d'éthylène, éventuellement copolymérisé avec une alpha-oléfine, de préférence le propylène, ces polymères d'éthylène étant modifiés par copolymérisation ou par greffage avec au moins un comonomère polaire choisis parmi les monomères présentant une insaturation éthylènique et au moins un groupe carboxylique, éventuellement estérifié, tel que l'acide acrylique, l'acide méthacrylique, l'acide crotonique, l'anhydride maléique et les esters d'alkyle ou d'hydroxyalkyle en C₁ à C₈, d'acides carboxyliques insaturés, tels que l'acrylate de méthyle, l'acrylate d'éthyle, l'acrylate d'hydroxyéthyle, le méthacrylate de méthyle, le méthacrylate d'éthyle ;
(c) des copolymères d'éthylène et d'au moins un ester vinylique, tels que l'acétate de vinyle, le propionate de vinyle, le butyrate de vinyle, éventuellement modifiés par greffage avec un acide carboxylique insaturé ou ses dérivés, en particulier l'anhydride maléique ;
(d) des mélanges des polymères d'éthylène (b) précités et des copolymères d'éthylène et d'ester vinylique (c) précités.

Parmi les matières adhésives préférées, on peut citer celles qui renferment un copolymère d'éthylène et d'acétate de vinyle, combiné à un homopolymère d'éthylène ou un copolymère d'éthylène et de propylène et/ou de butène, ces (co)polymères étant, de préférence, modifiés avec l'anhydride maléique, généralement par greffage.

De préférence, la matière adhésive renferme un élastomère oléfinique, en particulier un (co)polymère d'éthylène et/ou d'une alpha-oléfine (comme le propylène, le butène), de degré de cristallinité inférieur à 30 % ou amorphe.

Les meilleurs résultats en terme de transparence et d'adhérence ont été obtenus lorsque la couche intermédiaire transparente en matière adhésive a une épaisseur variant de 50 µm à 70 µm, et renferme majoritairement au moins un copolymère d'éthylène et d'acétate de vinyle, combiné à un homopolymère d'éthylène ou à un copolymère d'éthylène et de propylène et/ou de butène, ces polymères étant modifiés avec de l'anhydride maléique, cette matière adhésive ayant une température de ramollissement égale ou supérieure à 100° C, un indice de fluidité (M.F.I : ASTM D-1238 (190°C) variant de 1 à 5 g en 10 minutes et une température de transition vitreuse (Tg) inférieure à - 10° C, de préférence inférieure à - 20° C. Les produits extrudés comprenant une telle couche intermédiaire ont en effet atteint un niveau de transparence au moins égal à celui du polycarbonate et un niveau d'adhérence élevé supérieur à 10 Newton (NF T 580001), et généralement compris entre 20 et 70 Newton.

La présente invention n'est, bien entendu, pas limitée aux produits extrudés transparents à trois couches. Les produits extrudés, multicouches et transparents, peuvent comprendre plus de trois couches superposées et fixées entre elles. Ainsi, entrent dans le domaine de l'invention, des produits extrudés transparents, comprenant cinq couches transparentes superposées et fixées entre elles dans l'ordre suivant : couche de polyamide/couche en matière adhésive/couche en polycarbonate/couche en matière adhésive/couche de polyamide.

Lorsque le produit extrudé est une feuille multicouche transparente, elle peut être obtenue par un procédé de coextrusion-calandrage ou un procédé de coextrusion-soufflage. Par exemple, la fabrication d'une feuille transparente à trois couches, qui sont une couche en polycarbonate, une couche en une matière adhésive et une couche en polyamide, par extrusion-calandrage, comprend les principales étapes suivantes :
a) le chargement des trois matières premières (polycarbonate, matière adhésive et polyamide) de façon séparée dans trois trémies indépendantes pour le dosage de chaque matière,
b) coextrusion de chaque matière première simultanément respectivement dans une extrudeuse monovis, la coextrusion exigeant, dans le cas d'un tricouche, trois extrudeuses monovis,
c) distribution des flux de matière première fondue dans une filière plate, permettant d'obtenir un produit intermédiaire multicouche, la couche centrale étant formée de la matière adhésive,
d) calandrage et conjointement refroidissement du produit intermédiaire multicouche pour obtenir la feuille tricouche transparente conforme à la présente invention.

Finalement, la feuille multicouche transparente selon l'invention peut être transformée pour lui donner des formes variées, par exemple par thermoformage, ou surmoulage ou découpe.

Lorsque le produit extrudé est un profilé, ou un tube ou un jonc, le procédé de fabrication comprend les principales étapes suivantes (pour un tricouche) :
a) le chargement des trois matières premières séparément dans des trémies indépendantes pour le dosage de chaque matière,
b) coextrusion de chaque matière première simultanément, respectivement dans une extrudeuse monovis, la coextrusion exigeant, en conséquence, trois extrudeuses monovis dans le cas d'un tricouche,
c) distribution des flux de matière première dans une filière permettant d'obtenir un profilé (ou un tube, ou un jonc) multicouche, la couche intermédiaire étant formée de la matière adhésive,
d) passage du profilé (ou tube, ou jonc) multicouche en sortie de la filière dans un conformateur (cet appareil est également connu sous le vocable de "calibreur refroidisseur"),
e) éventuellement, transformation du profilé (ou tube, ou jonc) extrudé, multicouche et transparent, obtenue, par exemple par découpe, cintrage, etc.

Le produit extrudé, multicouche et transparent, issu du procédé selon l'invention est utile dans de nombreux domaines techniques, tels que :
- le secteur automobile, par exemple pour la protection des optiques de phare ou la décoration de l'habitacle d'un véhicule. Le procédé selon l'invention augmente considérablement la résistance au gravillonnage et aux solvants (hydrocarbures, essence).
- le secteur du bâtiment, par exemple en tant que vitres. Le procédé selon l'invention augmente la résistance à la rayure et aux solvants tels que les alcools.
- le secteur de la lunetterie, par exemple visières de casques. Le procédé selon l'invention permet d'augmenter la résistance à la rayure et aux solvants (alcools, etc).
- le secteur du sport, par exemple en tant que décoration de la surface supérieure des skis. Outre la résistance à la rayure, le grand intérêt de la présente invention réside dans les performances atteintes à basse température. En effet, dans des conditions normales d'utilisation, sous réserve de prévoir une épaisseur de la couche intermédiaire adhésive au moins égale à 50 µm et de choisir une matière adhésive appropriée, en particulier avec une température de transition vitreuse Tg suffisamment basse, le procédé selon l'invention conduit à l'obtention d'un produit multicouche sans délamination jusqu'à - 30° C.
- le secteur de l'ameublement et le secteur de l'électroménager, par exemple pour la décoration de l'enveloppe protectrice des organes d'un mécanisme d'appareils électroménagers. Le procédé selon l'invention permet d'augmenter la résistance à la rayure et aux solvants de leurs parties externes et visibles.
- etc.

Un mode de réalisation particulier est ci-après donné à titre d'exemple. Cet exemple, non limitatif de la présente invention, décrit la protection d'une feuille en polycarbonate par la fabrication d'une feuille multicouche et transparente, d'épaisseur totale de l'ordre de 630 µm, par coextrusion-calandrage.

Les matières premières utilisées sont les suivantes :
- du polycarbonate, sous la forme de granulés, convenant à la fabrication d'une couche transparente, de préférence étuvé pour éliminer les traces d'humidité,
- du polyamide 11 ou 12, sous la forme de granulés, de préférence étuvé pour éliminer les traces d'humidité,
- de la matière adhésive, sous la forme de granulés, renfermant au moins un copolymère d'éthylène et d'acétate de vinyle et au moins un polyéthylène modifié anhydride maléique, cette matière adhésive présentant un indice de fluidité (M.F.I. : ASTM D-1238 - 190°C) variant de 1 à 5 g en 10 minutes et une température de ramollissement de l'ordre de 110° C.

Les quantités de matières premières utilisées sont adaptées pour préparer une feuille transparente comprenant trois couches transparentes superposées et fixées entre elles, qui sont :
- une couche externe en polycarbonate, de 300 µm d'épaisseur,
- une couche centrale en matière adhésive, de 30 à 80 µm d'épaisseur,
- une couche externe en polyamide 11 ou 12, de 300 µm d'épaisseur.

Chaque matière première est chargée séparément dans une trémie, pesée puis introduite dans une extrudeuse monovis.

Les températures de l'extrudeuse prévue pour le polycarbonate et de celle prévue pour le polyamide 11 ou 12, varient de 220 à 250°C, tandis que la température de l'extrudeuse prévue pour la matière adhésive est inférieure aux valeurs précitées.

La température de la filière plate, permettant de transformer les flux de matières premières fondues en un produit intermédiaire tricouche, est d'environ 220°C.

En sortie de filière, le produit intermédiaire tricouche est calandré, entre des cylindres de calandrage chauffés à une température comprise entre 80 et 120°C.

Enfin, la feuille tricouche, transparente obtenue est refroidie à l'air puis stockée. La transparence de cette feuille tricouche est au moins égale à celle du polycarbonate transparent.

L'adhérence des couches entre elles de la feuille tricouche, transparente a été évaluée selon les conditions énoncées dans la norme NF T 58001.

La feuille multicouche, transparente de cet exemple a permis d'atteindre un niveau d'adhérence extrêmement élevé, puisque qu'une force de 70 Newton a été nécessaire pour provoquer une rupture entre les couches en polycarbonate et en polyamide (11 ou 12).

## Revendications

1. Procédé de protection d'un produit transparent en polycarbonate, contre la rayure, les solvants et les composés organiques, avec maintien de la transparence à une valeur au moins égale à celle du polycarbonate, caractérisé en ce qu'il consiste à extruder un produit multicouche et transparent, comprenant au moins trois couches superposées et fixées entre elles, qui sont successivement :
- une couche transparente en polycarbonate,
- une couche intermédiaire transparente dont l'épaisseur est au moins égale à 30 µm, en une matière adhésive présentant les caractéristiques suivantes :
• indice de fluidité (MFI : ASTM D-1238 - 190°C) de la matière adhésive variant de 0,5 à 7 g en 10 minutes ;
• température de ramollissement au moins égale à 70° C ;
• température de transition vitreuse inférieure à 0° C ;
- et une couche transparente en une matière thermoplastique choisie dans le groupe constitué par le polyamide 10, le polyamide 11, le polyamide 12, le polyamide 13, ou un mélange desdits polyamides.

2. Procédé selon la revendication 1, caractérisé en ce que la température de ramollissement de la matière adhésive est inférieure à 150° C.

3. Procédé selon la revendication 1, caractérisé en ce que la température de transition vitreuse est inférieure à - 10° C.

4. Procédé selon la revendication 3, caractérisé en ce que la température de transition vitreuse est inférieure à - 20° C.

5. Procédé selon la revendication 4, caractérisé en ce que la température de transition vitreuse est inférieure à - 30° C.

6. Procédé selon la revendication 1, caractérisé en ce que l'épaisseur de la couche intermédiaire est au plus égale à 100 µm.

7. Procédé selon la revendication 6, caractérisé en ce que l'épaisseur de la couche intermédiaire varie de 40 à 80 µm.

8. Procédé selon la revendication 7, caractérisé en ce que l'épaisseur de la couche intermédiaire est au moins égale à 50 µm.

9. Procédé selon la revendication 1, caractérisé en ce que l'indice de fluidité (MFI : ASTM D-1238 - 190°C) de la matière adhésive varie de 1 à 5 g en 10 minutes.

10. Procédé selon la revendication 1, caractérisé en ce que la température de ramollissement de la matière adhésive est égale ou supérieure à 100°C.

11. Procédé selon la revendication 10, caractérisé en ce que la température de ramollissement de la matière adhésive est de l'ordre de 110°C.

12. Procédé selon l'une quelconque des revendications précédentes, caractérisé en ce que la matière adhésive renferme au moins un copolymère d'éthylène et d'ester vinylique.

13. Procédé selon l'une quelconque des revendications 1 à 11, caractérisé en ce que la matière adhésive renferme au moins un polymère d'éthylène ou au moins un copolymère d'éthylène avec une alpha-oléfine.

14. Procédé selon les revendications 12 et 13, caractérisé en ce que la matière adhésive renferme :
- un copolymère d'éthylène et d'acétate de vinyle ;
- et un homopolymère d'éthylène ou un copolymère d'éthylène et de propylène et/ou de butène ;
ces polymères étant modifiés avec de l'anhydride maléique.

15. Procédé selon l'une quelconque des revendications précédentes, caractérisé en ce que l'on choisit le polyamide 11, ou le polyamide 12 ou un mélange de ces deux polyamides pour préparer la couche transparente en une matière thermoplastique.

16. Procédé selon l'une quelconque des revendications précédentes, caractérisé en ce que le produit extrudé est une feuille multicouche et transparente, obtenue par coextrusion-calandrage, dont l'épaisseur totale est égale ou supérieure à 200 µm

17. Procédé selon l'une quelconque des revendications 1 à 15, caractérisé en ce que le produit extrudé est une feuille multicouche et transparente, obtenue par coextrusion-soufflage.

18. Profilé, tube ou jonc, multicouche et transparent, obtenu par coextrusion, selon le procédé défini dans l'une quelconque des revendications 1 à 15.
